# EUROPEAN PATENT APPLICATION

(11) **EP 4 276 360 A1**
(43) Date of publication of application: **15.11.2023**
(21) Application number: 22736756.2
(22) Date of filing: 06.01.2022
(51) Int. Cl.: F24C 1/00

(54) **COOKING DEVICE**

(30) Priority: 07.01.2021 JP 2021001560
(71) Applicant: Sharp Kabushiki Kaisha, Sakai City, Osaka 590-8522 (JP)
(72) Inventor: NISHIJIMA, Masahiro, Sakai City, Osaka 590-8522 (JP); IWAMOTO, Masayuki, Sakai City, Osaka 590-8522 (JP)
(74) Representative: Treeby, Philip David William
(86) International application number: PCT/JP2022/000166
(87) International publication number: WO 2022/149588

(57) **Abstract**

A heating cooking apparatus includes a housing (14A), a cover portion, a fan (142), a first heater (141), a temperature detection unit (51), and a wall portion (60). The housing (14A) has an opening. The cover portion has a suction hole portion and a blow-out hole portion, and covers the opening. The fan (142) is disposed in the housing (14A) and generates an air flow from the suction hole portion to the blow-out hole portion. The first heater (141) is disposed in the housing (14A). The temperature detection unit (51) is disposed in the housing (14A) and detects a temperature. The wall portion (60) is disposed on an upstream side of the temperature detection unit (51) in an air flow direction (F1).

## Description

### Technical Field

The present invention relates to a heating cooking apparatus.

### Background Art

PTL 1 discloses a pull-out type heating cooking apparatus. The pull-out type heating cooking apparatus disclosed in PTL 1 includes a heating cooking apparatus main body and a pull-out body. The heating cooking apparatus main body includes a heating cooking chamber. The pull-out body can be pulled out toward the outside of the heating cooking apparatus main body in a state where the pull-out body is accommodated in the heating cooking chamber.

Heating functions of the pull-out type heating cooking apparatus disclosed in PTL 1 include a microwave heating function and a rapid hot air heating function. The microwave heating function is a function of irradiating an object to be heated with microwaves. The rapid hot air heating function is a function of blowing hot air from a top blow-out port and a side blow-out port toward an object to be heated and suctioning hot air from a side suction port. The top blow-out port is formed in a top wall of the heating cooking chamber. The side blow-out port is formed in a left side wall of the heating cooking chamber. The side suction port is formed in a back side wall of the heating cooking chamber.

### Citation List

### Patent Literature

PTL 1: JP 2010-133634 A

### Summary of Invention

### Technical Problem

There is a heating cooking apparatus including a temperature detection unit that detects a temperature in a heating cooking chamber. In a heating cooking apparatus having a rapid hot air heating function, there is room for detecting a temperature of air blown out from a blow-out hole portion with accuracy.

In light of the above problem, an object of the present invention is to provide a heating cooking apparatus that can detect a temperature of air blown out from a blow-out hole portion with accuracy.

### Solution to Problem

According to one aspect of the present invention, a heating cooking apparatus includes a housing, a cover portion, a fan, a first heater, a temperature detection unit, and a wall portion. The housing includes an opening. The cover portion includes a suction hole portion and a blow-out hole portion, and covers the opening. The fan is disposed in the housing and generates an air flow from the suction hole portion to the blow-out hole portion. The first heater is disposed in the housing. The temperature detection unit is disposed in the housing and detects a temperature. The wall portion is disposed on an upstream side of the temperature detection unit in a direction of the air flow.

### Advantageous Effects of Invention

According to the heating cooking apparatus of the present invention, it is possible to detect the temperature of air blown out from the blow-out hole portion with accuracy.

### Brief Description of Drawings

FIG. 1 is a perspective view illustrating a pull-out type heating cooking apparatus according to an embodiment of the present invention.
FIG. 2 is a right side view illustrating the pull-out type heating cooking apparatus according to the present embodiment.
FIG. 3 is a top view illustrating the pull-out type heating cooking apparatus according to the present embodiment.
FIG. 4 is an exploded perspective view illustrating a pull-out body according to the present embodiment.
FIG. 5 is a schematic cross-sectional view illustrating a heating cooking chamber according to the present embodiment.
FIG. 6 is a schematic cross-sectional view illustrating the heating cooking chamber according to the present embodiment.
FIG. 7 is a diagram illustrating a partitioning member according to the present embodiment.
FIG. 8 is a bottom view illustrating an air sending unit according to the present embodiment.
FIG. 9A is a perspective view illustrating the air sending unit according to the present embodiment.
FIG. 9B is a cross-sectional view illustrating a first wall according to the present embodiment.
FIG. 10 is a block diagram illustrating a configuration of the pull-out type heating cooking apparatus according to the present embodiment.
FIG. 11 is a perspective view illustrating a cabinet to which the pull-out type heating cooking apparatus according to the present embodiment is attached.

### Description of Embodiments

Hereinafter, embodiments of a pull-out type heating cooking apparatus according to the present invention will be described with reference to the drawings. Note that, in the drawings, the same or equivalent components are denoted by the same reference numerals and signs, and description thereof will not be repeated.

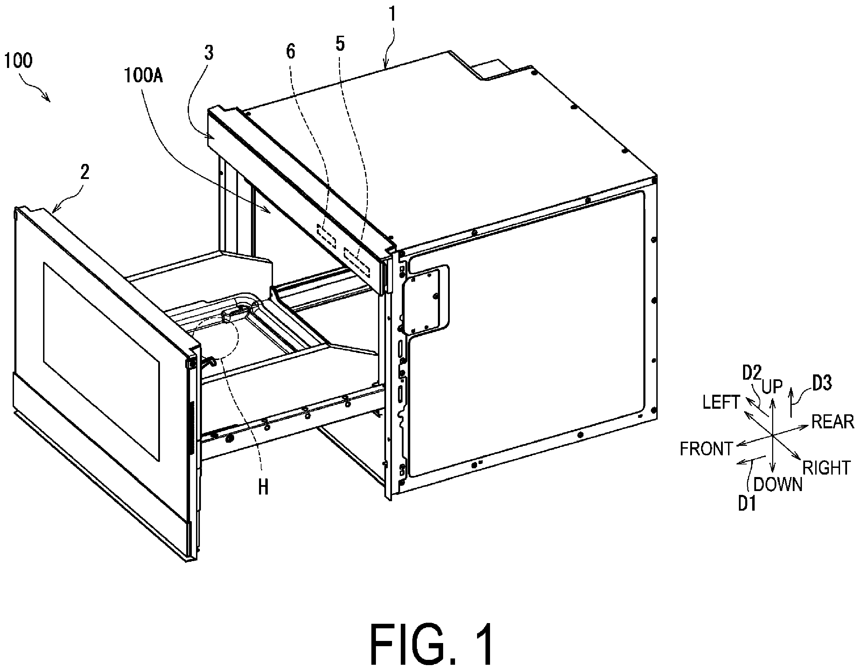

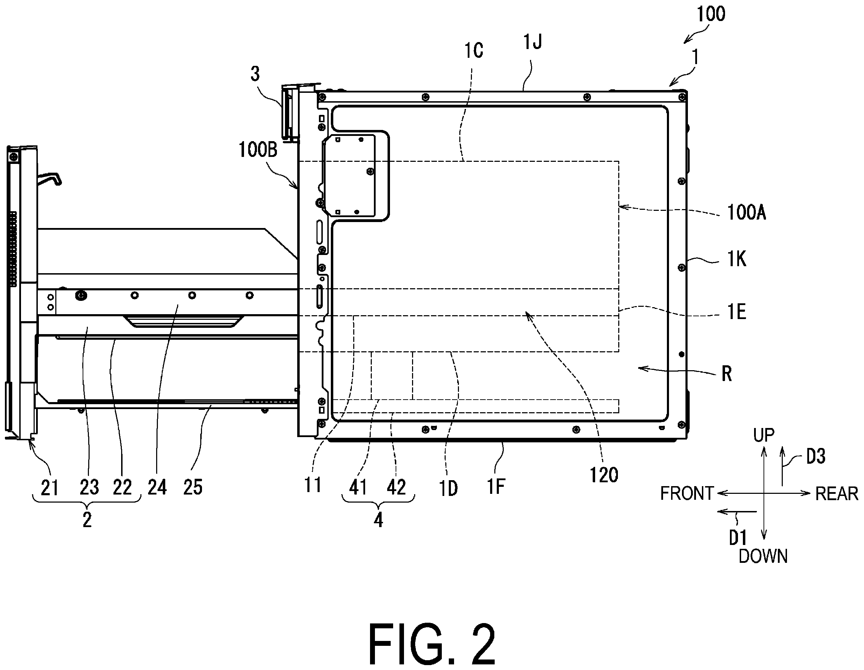

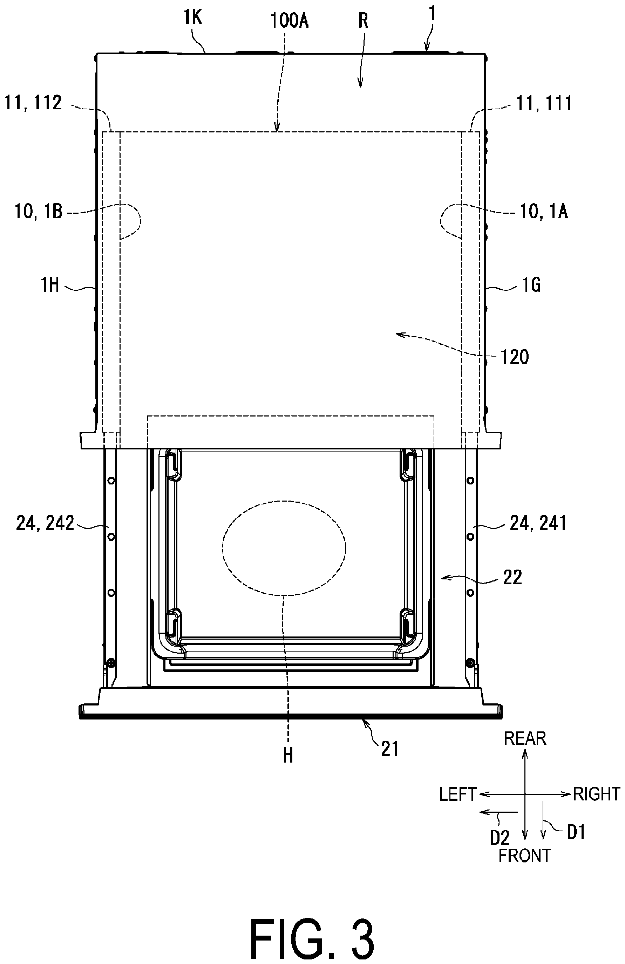

A pull-out type heating cooking apparatus 100 according to the present embodiment will be described with reference to FIG. 1 to FIG. 3. FIG. 1 is a perspective view illustrating the pull-out type heating cooking apparatus 100. FIG. 2 is a right side view illustrating the pull-out type heating cooking apparatus 100. FIG. 3 is a top view illustrating the pull-out type heating cooking apparatus 100. More specifically, FIG. 1 to FIG. 3 illustrate the pull-out type heating cooking apparatus 100 in a state where a pull-out body 2 is pulled out. Further, FIG. 1 illustrates an external appearance of the pull-out type heating cooking apparatus 100 as viewed diagonally from the upper front right. The pull-out type heating cooking apparatus 100 is an example of a heating cooking apparatus.

As illustrated in FIG. 1, the pull-out type heating cooking apparatus 100 heats and cooks an object H to be heated. The object H to be heated is, for example, a food product. The pull-out type heating cooking apparatus 100 includes a heating chamber 1, the pull-out body 2, an operation panel 3, and a heating cooking chamber 100A.

In the present embodiment, a side at which the operation panel 3 of the pull-out type heating cooking apparatus 100 is disposed is defined as a front side of the pull-out type heating cooking apparatus 100, and a side opposite to the front side (rear face side) is defined as a rear side of the pull-out type heating cooking apparatus 100. Further, a right side when the pull-out type heating cooking apparatus 100 is viewed from the front side is defined as a right side of the pull-out type heating cooking apparatus 100, and a side opposite to the right side is defined as a left side of the pull-out type heating cooking apparatus 100. Further, in a direction orthogonal to a front-rear direction and a left-right direction of the pull-out type heating cooking apparatus 100, a side at which the operation panel 3 is disposed is defined as an upper side of the pull-out type heating cooking apparatus 100, and a side opposite to the upper side (bottom side) is defined as a lower side of the pull-out type heating cooking apparatus 100. Note that these orientations do not limit an orientation of the pull-out type heating cooking apparatus 100 according to the present invention in use.

As illustrated in FIG. 1 to FIG. 3, the heating chamber 1 is a box-like member. Specifically, the heating chamber 1 includes a right outer wall 1G, a left outer wall 1H, a top outer wall 1J, a bottom outer wall 1F, and a back outer wall 1K. The heating chamber 1 accommodates the heating cooking chamber 100A.

The pull-out body 2 can be pulled out in a first direction D1 from the heating cooking chamber 100A. The first direction D1 is the forward direction. A third direction D3 intersects the first direction D1. In the present embodiment, the third direction D3 is orthogonal to the first direction D1. In the present embodiment, the third direction D3 is the upward direction. Specifically, the pull-out body 2 includes a lid portion 21, a placing portion 22, and a support portion 23.

The heating cooking chamber 100A includes an accommodation space 120 that accommodates the object H to be heated. The shape of the heating cooking chamber 100A is, for example, a substantially rectangular parallelepiped shape. Specifically, the heating cooking chamber 100A includes a pair of side wall portions 10, a back wall 1E, and an opening portion 100B. The back wall 1E intersects the first direction D1. The opening portion 100B faces the back wall 1E. The opening portion 100B opens toward the first direction D1. The opening portion 100B communicates with the outside of the heating cooking chamber 100A. The pair of side wall portions 10 face each other in a second direction D2. The second direction D2 is the left direction. Specifically, the pair of side wall portions 10 includes a right wall 1A and a left wall 1B. The heating cooking chamber 100A further includes a top wall 1C and a bottom wall 1D. Materials of the right wall 1A, the left wall 1B, the top wall 1C, the bottom wall 1D, and the back wall 1E are, for example, a metal.

The heating chamber 1 further includes a space R between the heating chamber 1 and the heating cooking chamber 100A. Specifically, the heating chamber 1 further includes the space R between the bottom wall 1D and the bottom outer wall 1F. The heating chamber 1 further includes the space R between the right wall 1A and the right outer wall 1G. The heating chamber 1 further includes the space R between the left wall 1B and the left outer wall 1H. The heating chamber 1 further includes the space R between the top wall 1C and the top outer wall 1J. The heating chamber 1 further includes the space R between the back wall 1E and the back outer wall 1K.

As illustrated in FIG. 3, the pull-out type heating cooking apparatus 100 further includes a pair of rail members 11. Specifically, one rail member of the pair of rail members 11 includes a right side rail member 111, and the other rail member of the pair of rail members 11 includes a left side rail member 112. The right side rail member 111 and the left side rail member 112 face each other in the left-right direction.

Each of the right side rail member 111 and the left side rail member 112 is disposed in the heating chamber 1. Specifically, each of the right side rail member 111 and the left side rail member 112 is disposed between the heating chamber 1 and the heating cooking chamber 100A. More specifically, the right side rail member 111 is fixed on the right wall 1A in the space R between the right wall 1A and the right outer wall 1G. The left side rail member 112 is fixed on the left wall 1B in the space R between the left wall 1B and the left outer wall 1H. Particularly, each of the right side rail member 111 and the left side rail member 112 extends in the first direction D1.

Meanwhile, the pull-out type heating cooking apparatus 100 further includes a pair of slide members 24. Specifically, one slide member of the pair of slide members 24 includes a right side slide member 241, and the other slide member of the pair of slide members 24 includes a left side slide member 242. The right side slide member 241 and the left side slide member 242 face each other in the left-right direction.

Each of the right side slide member 241 and the left side slide member 242 is disposed on the lid portion 21. Specifically, one end portion of the right side slide member 241 is attached to a right edge portion of the lid portion 21. One end portion of the left side slide member 242 is attached to a left edge portion of the lid portion 21. Particularly, each of the right side slide member 241 and the left side slide member 242 extends in a direction opposite to the first direction D1 from the lid portion 21.

The right side slide member 241 is slidably supported by the right side rail member 111. The left side slide member 242 is slidably supported by the left side rail member 112.

As illustrated in FIG. 2, the pull-out type heating cooking apparatus 100 further includes a support member 25. The support member 25 supports the lid portion 21. One end portion of the support member 25 is attached at a center portion in the left-right direction of the lid portion 21 and below the placing portion 22. The support member 25 is a plate-like member extending in the direction opposite to the first direction D1 from the lid portion 21. The support member 25 includes a rack portion. The rack portion includes teeth. The support member 25 may be a single plate-like member or a plurality of plate-like members.

Meanwhile, the pull-out type heating cooking apparatus 100 further includes a drive mechanism 4. The drive mechanism 4 drives the support member 25. The drive mechanism 4 is positioned below the heating cooking chamber 100A. Specifically, the drive mechanism 4 is accommodated in the space R between the bottom wall 1D and the bottom outer wall 1F. For example, the drive mechanism 4 includes a drive motor 41, a pinion, and a drive rail 42. The drive rail 42 is fixed in the space R between the bottom wall 1D and the bottom outer wall 1F. The drive rail 42 is a member having the front-rear direction as a longitudinal direction. The support member 25 is slidably supported by the drive rail 42. The pinion is attached to an endmost portion of the drive motor 41.

The pinion engages with the rack portion of the support member 25. Furthermore, the support member 25 moves in the front-rear direction as a result of rotation of the pinion. Note that the drive mechanism 4 may drive at least one of the support member 25, and the right side slide member 241 and the left side slide member 242. Furthermore, in a case where the right side slide member 241 and the left side slide member 242 are driven, the drive mechanism 4 may be positioned more on the side than the heating cooking chamber 100A.

As illustrated in FIG. 1, the operation panel 3 receives an operation from a user. The operation includes, for example, a cooking method for heating and cooking the object H to be heated, or information about movement of the lid portion 21 between the closed position and the open position thereof. Specifically, the operation panel 3 includes a display unit, a storage unit 6, and a control unit 5. The display unit displays various pieces of information. Specifically, the display unit includes a liquid crystal panel.

The storage unit 6 is constituted by a random access memory (RAM) and a read only memory (ROM). The storage unit 6 stores a control program for controlling an operation of each unit of the pull-out type heating cooking apparatus 100. The storage unit 6 stores setting information input by operating the display unit.

The control unit 5 is a hardware circuit that includes a processor such as a central processing unit (CPU). The control unit 5 executes the control program stored in the storage unit 6.

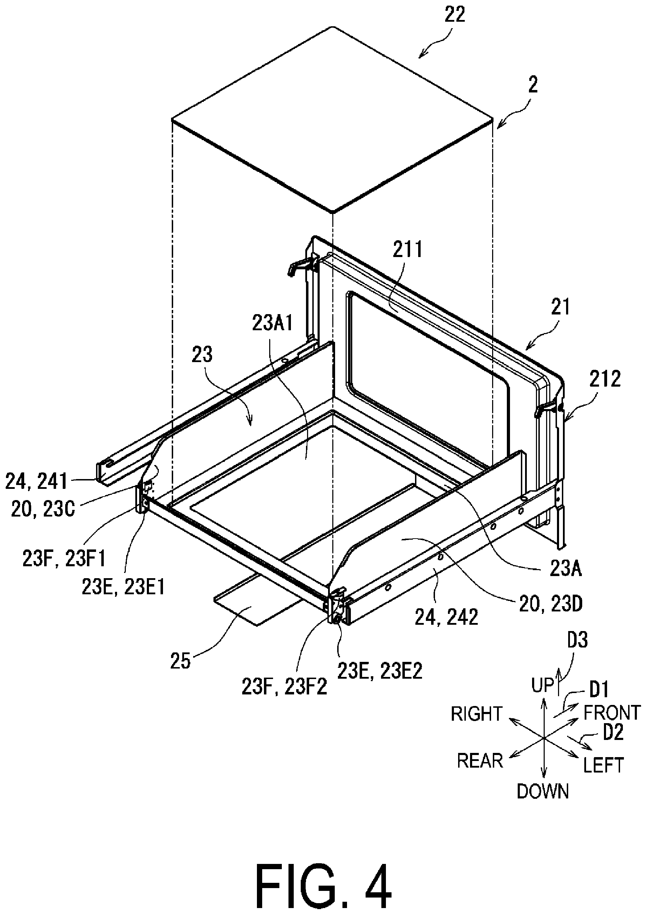

Next, the pull-out body 2 will be described in detail with reference to FIG. 4. FIG. 4 is an exploded perspective view illustrating the pull-out body 2 according to the present embodiment. As illustrated in FIG. 4, the lid portion 21 includes a plate-like member 211 and a cover member 212.

The plate-like member 211 opens and closes the opening portion 100B of the heating cooking chamber 100A. Specifically, the plate-like member 211 moves between a closed position and an open position. The closed position indicates a position where the plate-like member 211 closes the opening portion 100B. On the other hand, the open position is positioned more on the first direction D1 side than the closed position and indicates a position where the plate-like member 211 opens the opening portion 100B.

The cover member 212 covers the entire front surface of the plate-like member 211 on the first direction D1 side. Specifically, the cover member 212 is positioned outside the heating cooking chamber 100A when the plate-like member 211 is positioned at the closed position. The material of the cover member 212 is synthetic resin. The synthetic resin includes, for example, polybutylene terephthalate.

The object H to be heated can be placed on the placing portion 22. Specifically, the placing portion 22 has a placing surface on which the object H to be heated is placed. The material of the placing portion 22 is a non-metal, and is preferably ceramic or glass, for example.

The support portion 23 is attached to the lid portion 21 and supports a peripheral edge portion of the placing portion 22 such that the placing portion 22 is held in a horizontal state. Specifically, the support portion 23 includes a bottom plate portion 23A and a pair of wall portions 20. The material of the support portion 23 is, for example, a metal.

The bottom plate portion 23A includes a rectangular opening 23A1. The rectangular opening 23A1 is positioned at substantially a center portion of the bottom plate portion 23A.

One wall portion of the pair of wall portions 20 includes a right side plate portion 23C, and the other wall portion of the pair of wall portions 20 includes a left side plate portion 23D. Each of the right side plate portion 23C and the left side plate portion 23D extends along the first direction D1. The right side plate portion 23C and the left side plate portion 23D face each other in the left-right direction. More specifically, the right side plate portion 23C and the left side plate portion 23D extend upward from the peripheral edge portion of the bottom plate portion 23A. Specifically, the positions of the upper ends of the right side plate portion 23C and the left side plate portion 23D are higher than the positions of the upper ends of the right side rail member 111 and the left side rail member 112. The placing portion 22 is fitted among the lid portion 21, the right side plate portion 23C, and the left side plate portion 23D. The peripheral edge portion of the placing portion 22 is fixed to an upper surface of the peripheral edge portion of the bottom plate portion 23A.

The support portion 23 further includes a pair of rollers 23E and a pair of rollers 23F. The pair of rollers 23E and the pair of rollers 23F rotate as the pull-out body 2 moves. Specifically, one roller of the pair of rollers 23E includes a right side roller 23E1, and the other roller of the pair of rollers 23E includes a left side roller 23E2. The right side roller 23E1 and the left side roller 23E2 rotate about a rotation axis along the second direction D2. In addition, the right side roller 23E1 is attached to a rear end portion of the right side plate portion 23C. The left side roller 23E2 is attached to a rear end portion of the left side plate portion 23D. The right side roller 23E1 and the left side roller 23E2 are in contact with the bottom wall 1D.

Also, one roller of the pair of rollers 23F includes a right side roller 23F1, and the other roller of the pair of rollers 23F includes a left side roller 23F2. The right side roller 23F1 and the left side roller 23F2 rotate about a rotation axis along the third direction D3. The right side roller 23F1 is attached to a rear end portion of the right side plate portion 23C. The left side roller 23F2 is attached to a rear end portion of the left side plate portion 23D. The right side roller 23F1 is in contact with the right wall 1A. The left side roller 23F2 is in contact with the left wall 1B.

The placing portion 22 and the support portion 23 are accommodated in the heating cooking chamber 100A when the plate-like member 211 is positioned at the closed position. On the other hand, when the plate-like member 211 is positioned at the open position, the placing portion 22 and the support portion 23 are pulled out from the heating cooking chamber 100A, in a state where the pair of rollers 23E and the pair of rollers 23F are accommodated in the heating cooking chamber 100A.

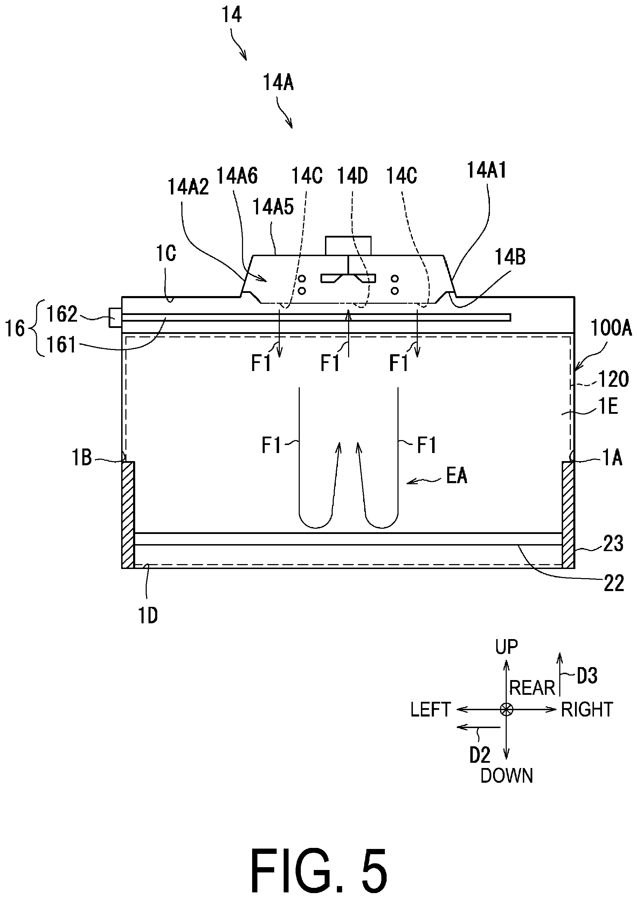

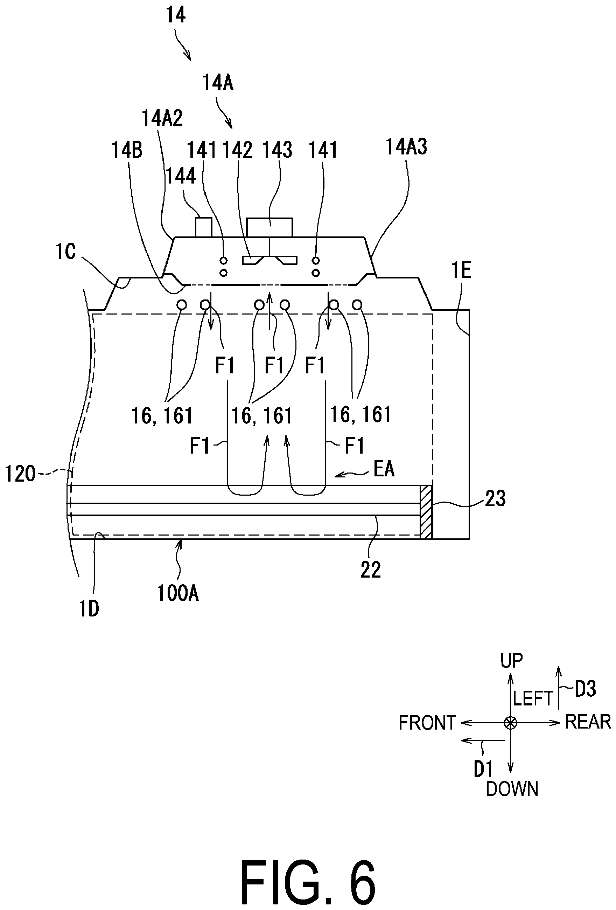

Next, the heating cooking chamber 100A according to the present embodiment will be further described with reference to FIG. 1 to FIG. 6. FIG. 5 and FIG. 6 each are a schematic cross-sectional view illustrating the heating cooking chamber 100A according to the present embodiment. Particularly, FIG. 5 illustrates a cross section of the heating cooking chamber 100A taken along a plane orthogonal to the front-rear direction. FIG. 6 illustrates a cross section of the heating cooking chamber 100A taken along a plane orthogonal to the left-right direction.

As illustrated in FIG. 5 and FIG. 6, the pull-out type heating cooking apparatus 100 further includes a grill unit 16. Specifically, the grill unit 16 includes a second heater 161 and an energization unit 162. The second heater 161 is positioned in the heating cooking chamber 100A. Thus, the second heater 161 can heat the object H to be heated. Particularly, the second heater 161 is positioned at an upper portion in the heating cooking chamber 100A. The second heater 161 has a substantially U shape when viewed from the lower side to the upper side. In the present embodiment, three of the grill units 16 are disposed. The second heater 161 is, for example, a sheathed heater. The energization unit 162 is positioned outside the left wall 1B. The energization unit 162 is connected to the external power source. The energization unit 162 energizes the second heater 161. The energized second heater 161 generates heat.

As illustrated in FIG. 5 and FIG. 6, the pull-out type heating cooking apparatus 100 further includes an air sending unit 14. The air sending unit 14 circulates air between the inside of the heating cooking chamber 100A and the inside of a heating room 14A. Specifically, the air sending unit 14 includes the heating room 14A, a suction hole portion 14D, a blow-out hole portion 14C, a centrifugal fan 142, and a drive unit 143. The heating room 14A is an example of a "housing". The centrifugal fan 142 is an example of a "fan".

The heating room 14A is, for example, a box-like member. The heating room 14A includes an opening 14A6. The opening 14A6 is positioned on a lower side of the heating room 14A. Specifically, the heating room 14A includes a right wall 14A1, a left wall 14A2, a rear wall 14A3, a front wall 14A4, and a base portion 14A5. The heating room 14A is positioned in the third direction D3 with respect to the accommodation space 120. Specifically, the heating room 14A is positioned above the accommodation space 120 with the top wall 1C interposed therebetween.

The suction hole portion 14D is positioned in the third direction D3 with respect to the accommodation space 120. The blow-out hole portion 14C is positioned in the third direction D3 with respect to the accommodation space 120. Specifically, the suction hole portion 14D is positioned above the accommodation space 120. The blow-out hole portion 14C is positioned above the accommodation space 120.

The centrifugal fan 142 is disposed in the heating room 14A. Specifically, the centrifugal fan 142 faces the heating cooking chamber 100A. The suction hole portion 14D faces the centrifugal fan 142.

The centrifugal fan 142 generates an air flow from the suction hole portion 14D to the blow-out hole portion 14C. Specifically, the centrifugal fan 142 rotates in a predetermined rotation direction at a predetermined rotation speed to generate an air flow from the suction hole portion 14D to the blow-out hole portion 14C. Particularly, the air sending unit 14 suctions air from the inside of the heating cooking chamber 100A to the heating room 14A through the suction hole portion 14D and blows air from the heating room 14A into the heating cooking chamber 100A through the blow-out hole portion 14C.

The drive unit 143 is positioned outside the heating room 14A. The drive unit 143 is connected to an external power source. The drive unit 143 drives the centrifugal fan 142. The drive unit 143 includes, for example, a motor.

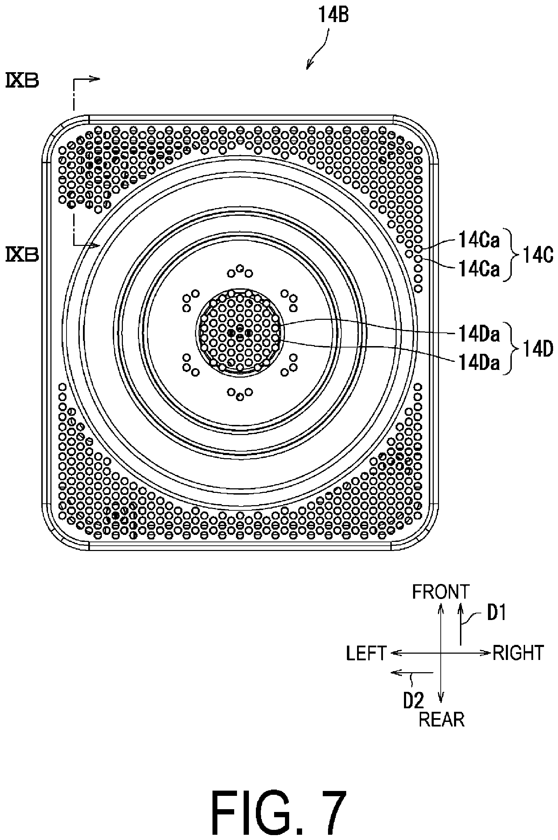

Next, the air sending unit 14 according to the present embodiment will be described in detail with reference to FIG. 1 to FIG. 7. FIG. 7 is a diagram illustrating a partitioning member 14B according to the present embodiment. As illustrated in FIG. 7, the air sending unit 14 further includes the partitioning member 14B. The partitioning member 14B is an example of a "cover portion".

The partitioning member 14B covers the opening 14A6. The partitioning member 14B faces the base portion 14A5. In other words, the base portion 14A5 faces the partitioning member 14B. The partitioning member 14B is positioned above the accommodation space 120. Specifically, the partitioning member 14B is positioned between the heating room 14A and the heating cooking chamber 100A. The partitioning member 14B is, for example, a plate-like member made of a metal. The shape of the partitioning member 14B is, for example, a square shape when viewed from the lower side to the upper side. The partitioning member 14B is disposed in a substantially center portion of the top wall 1C. The suction hole portion 14D and the blow-out hole portion 14C are disposed in the partitioning member 14B. In other words, the partitioning member 14B has the suction hole portion 14D and the blow-out hole portion 14C. Thus, the suction hole portion 14D and the blow-out hole portion 14C can be easily disposed above the accommodation space 120.

Particularly, the suction hole portion 14D is, for example, a set of a plurality of punched holes 14Da. Similarly, the blow-out hole portion 14C is also, for example, a set of a plurality of punched holes 14Ca. Each of the punched holes 14Da and the punched holes 14Ca has, for example, a circular shape. The diameter of each of the punched holes 14Da and the punched holes 14Ca is, for example, 3.4 mm. The size of each of the punched holes 14Da and the punched holes 14Ca is small. As a result, it is possible to prevent a tool or the like from being caught in the suction hole portion 14D and the blow-out hole portion 14C when the heating cooking chamber 100A is cleaned.

More particularly, the blow-out hole portion 14C surrounds the suction hole portion 14D. Specifically, the suction hole portion 14D is disposed at the center portion of the partitioning member 14B. The set of the plurality of punched holes 14Da of the suction hole portion 14D has, for example, a circular shape. On the other hand, the blow-out hole portion 14C is disposed along the outer periphery of the suction hole portion 14D. The set of the plurality of punched holes 14Ca of the blow-out hole portion 14C has, for example, an annular shape.

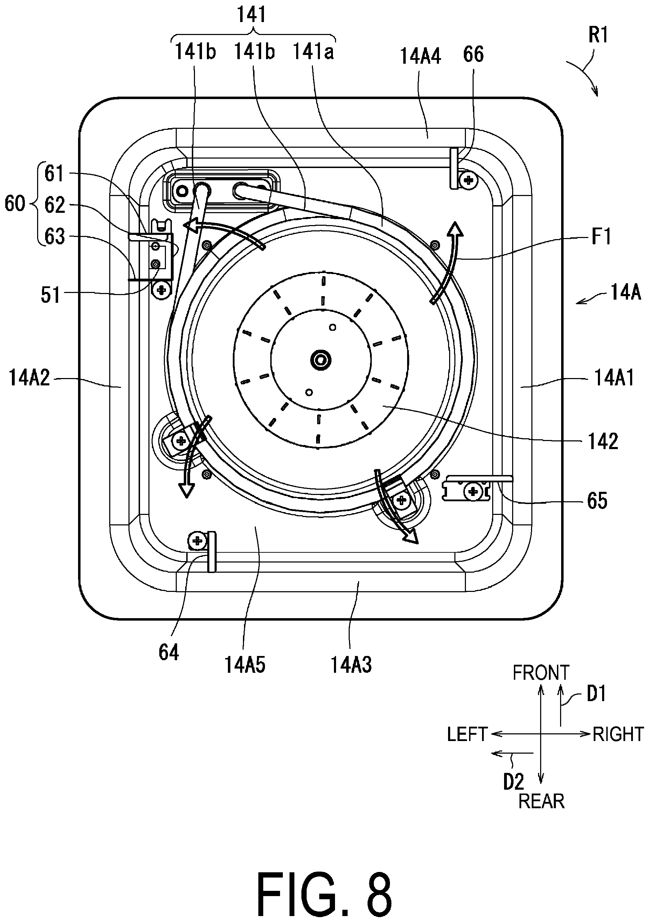

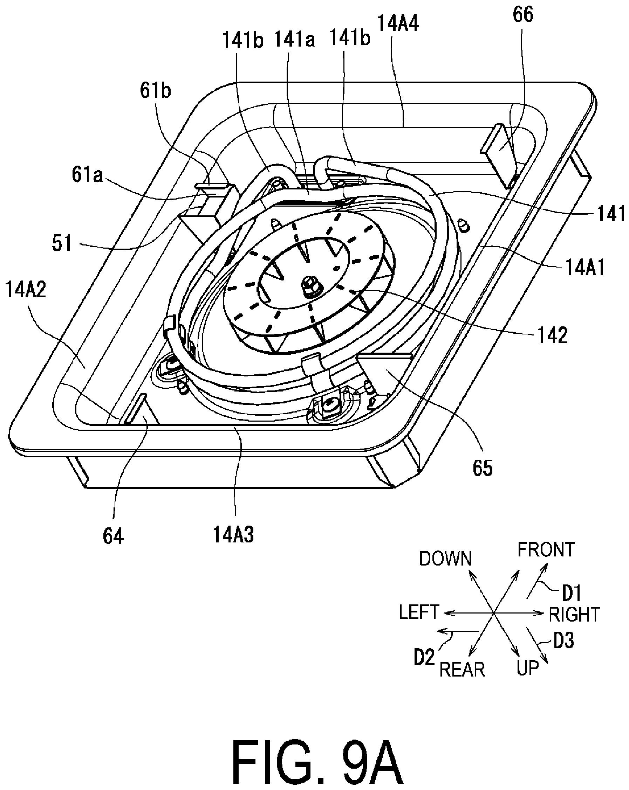

Here, the air sending unit 14 will be described in detail with reference to FIG. 5 to FIG. 9A. FIG. 8 is a bottom view illustrating the air sending unit 14. FIG. 9A is a perspective view illustrating the air sending unit 14. Particularly, FIG. 8 and FIG. 9A each illustrate a diagram of the air sending unit 14 in a state where the partitioning member 14B is removed. As illustrated in FIG. 5 to FIG. 9A, the air sending unit 14 further includes a first heater 141 and an energization unit 144.

The first heater 141 is disposed in the heating room 14A. Specifically, the first heater 141 is disposed along the outer periphery of the centrifugal fan 142. More specifically, the shape of the first heater 141 is a circular ring when viewed from the upper side to the lower side. The first heater 141 heats air in the heating room 14A. Specifically, the first heater 141 heats air blown out from the centrifugal fan 142. The first heater 141 is, for example, a sheathed heater.

The energization unit 144 is positioned outside the heating room 14A. The energization unit 144 is connected to the external power source. The energization unit 144 energizes the first heater 141. The energized first heater 141 generates heat.

Here, the air flow will be described in detail. First, the centrifugal fan 142 rotates in a predetermined rotation direction R1 at a predetermined rotation speed. The centrifugal fan 142 suctions air from the inside of the heating cooking chamber 100A through the suction hole portion 14D. The air sucked by the centrifugal fan 142 is blown out from the centrifugal fan 142. The air blown out from the centrifugal fan 142 is heated by the first heater 141. The air heated by the first heater 141 is blown into the heating cooking chamber 100A through the blow-out hole portion 14C.

The air sending unit 14 according to the present embodiment further includes a thermistor 51 and a wall portion 60. The thermistor 51 is an example of a "temperature detection unit". The thermistor 51 and the wall portion 60 are disposed along the outer periphery of the centrifugal fan 142.

Particularly, the wall portion 60 is disposed in an upstream side of the thermistor 51 in an air flow direction F1. In other words, the wall portion 60 is disposed in a direction opposite to the predetermined rotation direction R1 from the thermistor 51. The material of the wall portion 60 is, for example, a metal. Specifically, the wall portion 60 includes a first wall 61.

The first wall 61 is disposed on the upstream side of the thermistor 51 in the air flow direction F1. Specifically, the first wall 61 has a first main body wall 61a and a first inclined wall 61b. The first main body wall 61a is an example of a "main body wall". The first inclined wall 61b is an example of an "inclined wall". The first main body wall 61a extends from the base portion 14A5 toward the partitioning member 14B. Particularly, the first wall 61 is disposed parallel to the front wall 14A4 at a predetermined interval from the front wall 14A4. A left end portion of the first wall 61 is coupled to the left wall 14A2. As a result, the air blown out from the centrifugal fan 142 is brought into contact with the first wall 61. Thus, the temperature of the first wall 61 increases in accordance with the temperature of the air.

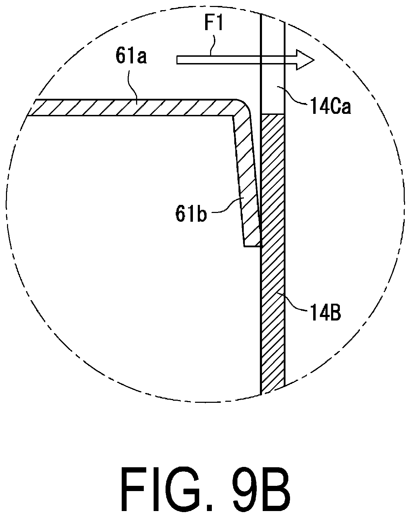

Here, the first wall 61 will be described in detail with reference to FIG. 7 and FIG. 9B. FIG. 9B is a cross-sectional view illustrating the first wall 61. Particularly, FIG. 9B is a cross-sectional view of the first wall 61 taken along line IXB in FIG. 7. As illustrated in FIG. 7 and FIG. 9B, the first inclined wall 61b is disposed at an endmost portion of the first main body wall 61a. The first inclined wall 61b is inclined in the air flow direction F1 toward the partitioning member 14B. The first inclined wall 61b has elasticity in the up-down direction. The first inclined wall 61b and the partitioning member 14B come into contact with each other. As a result, the air blown out from the centrifugal fan 142 can be brought into contact with the first wall 61 and guided to the blow-out hole portion 14C. Further, even when the heating room 14A is deformed (expanded or the like) due to heat, the first inclined wall 61b continues to be in contact with the partitioning member 14B.

As illustrated again in FIG. 8 and FIG. 9A, the thermistor 51 is disposed in the heating room 14A. The thermistor 51 detects a temperature. Specifically, the thermistor 51 detects the temperature of air in the heating room 14A. More specifically, the thermistor 51 detects the temperature of air in the vicinity of the wall portion 60. The thermistor 51 is connected to the control unit 5. The thermistor 51 outputs a detection result to the control unit 5 at predetermined time intervals. The control unit 5 calculates the temperature of the air in the heating room 14A based on a temperature correlation stored in advance in the storage unit 6 and the detection result.

As described above, the wall portion 60 is disposed on the upstream side of the thermistor 51 in the air flow direction F1, and thus, it is possible to prevent the air blown out from the centrifugal fan 142 from directly coming into contact with the thermistor 51. As a result, the thermistor 51 can detect the temperature of the air in the heating room 14A through the wall portion 60. Accordingly, it is possible to detect the temperature of the air blown out from the blow-out hole portion 14C with accuracy.

In addition, the air blown out from the centrifugal fan 142 does not directly come into contact with the thermistor 51, and thus, it is possible to prevent the temperature of the thermistor 51 from exceeding a heat resistance temperature.

Furthermore, the first wall 61 includes the first main body wall 61a and the first inclined wall 61b, and thus, even when the heating room 14A is deformed (expanded or the like) due to heat, the air blown out from the centrifugal fan 142 can be further prevented from directly coming into contact with the thermistor 51. In addition, a burr side of an end surface of the first inclined wall 61b does not touch the partitioning member 14B, and thus, it is possible to prevent scratching noise generated when the burr side of the end surface of the first inclined wall 61b and the partitioning member 14B rub against each other.

Next, the wall portion 60 will be described in detail. The wall portion 60 further includes a second wall 62 and a third wall 63.

The second wall 62 is disposed between the first heater 141 and the thermistor 51. The second wall 62 extends from the base portion 14A5 toward the partitioning member 14B. In the up-down direction, a length of the second wall 62 is greater than a length of the first main body wall 61a. Particularly, the second wall 62 is disposed parallel to the left wall 14A2 at a predetermined interval from the left wall 14A2. A front end portion of the second wall 62 and a right end portion of the first main body wall 61a are coupled to each other. As a result, the heat generated by the first heater 141 does not directly come into contact with the thermistor 51. This makes it possible to further prevent the temperature of the thermistor 51 from exceeding the heat resistance temperature.

The third wall 63 is disposed on a downstream side of the thermistor 51 in the air flow direction F1. The third wall 63 extends from the base portion 14A5 toward the partitioning member 14B. In the up-down direction, a length of the third wall 63 is greater than the length of the first main body wall 61a. Particularly, the third wall 63 is disposed parallel to the first wall 61 at a predetermined interval from the first wall 61. A left end portion of the third wall 63 is coupled to the left wall 14A2. A right end portion of the third wall 63 is coupled to the second wall 62. That is, the wall portion 60 surrounds the thermistor 51. This makes it possible to further prevent the temperature of the thermistor 51 from exceeding the heat resistance temperature.

Next, an air flow will be described in detail with reference to FIG. 5 to FIG. 9. As illustrated in FIG. 8 and FIG. 9, the air sending unit 14 further includes a first straightening plate 64, a second straightening plate 65, and a third straightening plate 66. Each of the first straightening plate 64, the second straightening plate 65, and the third straightening plate 66 has a second main body wall and a second inclined wall. The second main body wall extends from the base portion 14A5 toward the partitioning member 14B. The second inclined wall is disposed at an endmost portion of the second main body wall. The second inclined wall is inclined in the air flow direction F1 toward the partitioning member 14B. The second inclined wall and the partitioning member 14B come into contact with each other.

Particularly, the first straightening plate 64 is disposed parallel to the left wall 14A2 at a predetermined interval from the left wall 14A2. A rear end portion of the first straightening plate 64 is coupled to the rear wall 14A3. As a result, the air blown out from the centrifugal fan 142 is brought into contact with the first straightening plate 64 and guided to the blow-out hole portion 14C. Even when the heating room 14A is deformed (expanded or the like) due to heat, the first straightening plate 64 continues to be in contact with the partitioning member 14B. In addition, a burr side of an end surface of the first straightening plate 64 does not touch the partitioning member 14B, and thus, it is possible to prevent scratching noise generated when the burr side of the end surface of the first straightening plate 64 and the partitioning member 14B rub against each other.

The second straightening plate 65 is disposed parallel to the rear wall 14A3 at a predetermined interval from the rear wall 14A3. A right end portion of the second straightening plate 65 is coupled to the right wall 14A1. As a result, the air blown out from the centrifugal fan 142 is brought into contact with the second straightening plate 65 and guided to the blow-out hole portion 14C. Even when the heating room 14A is deformed (expanded or the like) due to heat, the second straightening plate 65 continues to be in contact with the partitioning member 14B. In addition, a burr side of an end surface of the second straightening plate 65 does not touch the partitioning member 14B, and thus, it is possible to prevent scratching noise generated when the burr side of the end surface of the second straightening plate 65 and the partitioning member 14B rub against each other.

Furthermore, the third straightening plate 66 is disposed parallel to the right wall 14A1 at a predetermined interval from the right wall 14A1. A front end portion of the third straightening plate 66 is coupled to the front wall 14A4. As a result, the air blown out from the centrifugal fan 142 is brought into contact with the third straightening plate 66 and guided to the blow-out hole portion 14C. Even when the heating room 14A is deformed (expanded or the like) due to heat, the third straightening plate 66 continues to be in contact with the partitioning member 14B. In addition, a burr side of an end surface of the third straightening plate 66 does not touch the partitioning member 14B, and thus, it is possible to prevent scratching noise generated when the burr side of the end surface of the third straightening plate 66 and the partitioning member 14B rub against each other.

As described above, the air sending unit 14 further includes the wall portion 60, the first straightening plate 64, the second straightening plate 65, and the third straightening plate 66, and thus, the air sending unit 14 can suck air from a predetermined region EA in the accommodation space 120 into the heating room 14A and blow air from the heating room 14A to the predetermined region EA in the accommodation space 120 through the blow-out hole portion 14C. The predetermined region EA is, for example, a center region within the accommodation space 120. A center portion of the object H to be heated is disposed in the predetermined region EA. According to the present embodiment, the thermistor 51 is disposed in the heating room 14A, and thus, the control unit 5 can calculate the temperature of the air in the predetermined region EA with accuracy.

Next, the first heater 141 will be described in detail. Specifically, the first heater 141 further includes a heat generating portion 141a and a pair of coupling portions 141b. A current flows through the heat generating portion 141a to generate heat. The heat generating portion 141a is disposed in the heating room 14A. Specifically, the heat generating portion 141a is disposed along the outer periphery of the centrifugal fan 142.

Each of the pair of coupling portions 141b is a non-heat generating portion that generates little heat, as compared to the heat generating portion 141a. Each of the pair of coupling portions 141b couples the heat generating portion 141a and the energization unit 144. Specifically, the heat generating portion 141a is disposed between the coupling portion 141b and the coupling portion 141b. One coupling portion of the pair of coupling portions 141b is closer to the thermistor 51 than the heat generating portion 141a. As a result, the heat generating portion 141a is not close to the thermistor 51. This makes it possible to further prevent the temperature of the thermistor 51 from exceeding the heat resistance temperature.

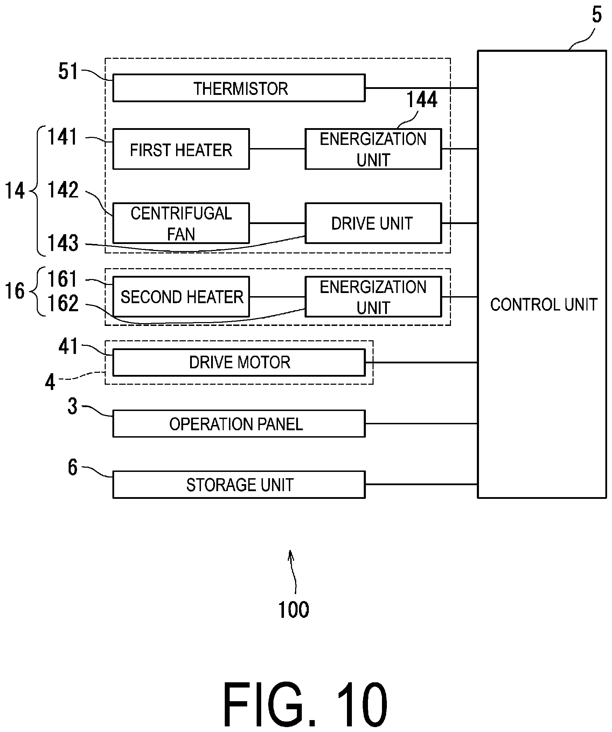

Next, a configuration of the pull-out type heating cooking apparatus 100 will be described in detail with reference to FIG. 10. FIG. 10 is a block diagram illustrating a configuration of the pull-out type heating cooking apparatus 100 according to the present embodiment.

In the present embodiment, the pull-out type heating cooking apparatus 100 has a "hot air circulation heating mode" and a "grill heating mode" as heating cooking modes. The "hot air circulation heating mode" is a mode in which air is circulated in the heating cooking chamber 100A to preheat the predetermined region EA in the heating cooking chamber 100A for a short time. The "grill heating mode" is mainly a mode in which the object H to be heated is heated and cooked by conducting the heat generated by the second heater 161 to the object H to be heated.

As illustrated in FIG. 10, the control unit 5 controls the energization unit 144, the drive unit 143, the energization unit 162, the drive motor 41, the operation panel 3, and the storage unit 6 by executing control programs stored in the storage unit 6.

When the "hot air circulation heating mode" is received, the control unit 5 controls the energization unit 144 and the drive unit 143 based on the detection result of the thermistor 51. When the "grill heating mode" is received, the control unit 5 controls the energization unit 162 based on the detection result of the thermistor 51.

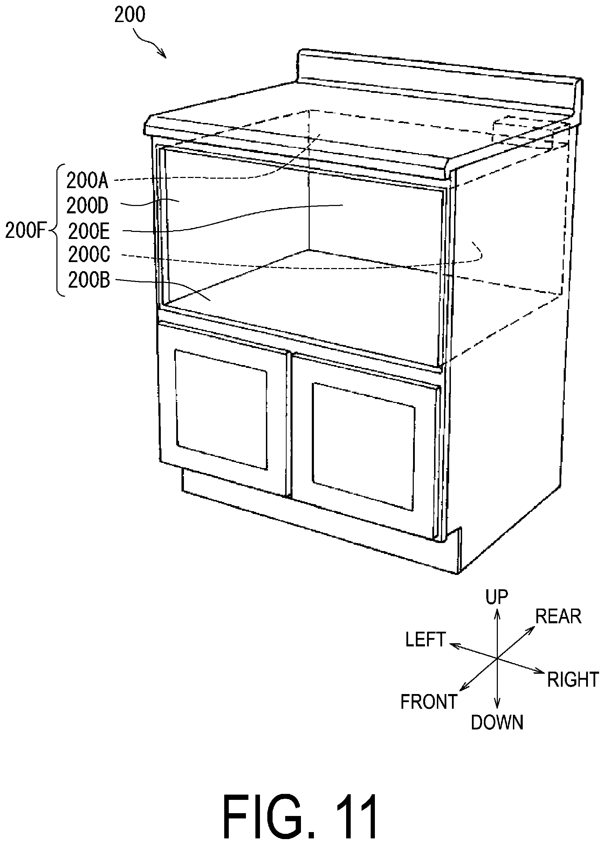

Next, a cabinet 200 to which the pull-out type heating cooking apparatus 100 is attached will be described with reference to FIG. 11. FIG. 11 is a diagram illustrating an appearance of the cabinet 200 to which the pull-out type heating cooking apparatus 100 according to the present embodiment is attached.

The pull-out type heating cooking apparatus 100 is installed in the cabinet 200 in a built-in manner. As illustrated in FIG. 11, the cabinet 200 includes an upper wall 200A, a lower wall 200B, a right wall 200C, a left wall 200D, and a rear wall 200E. The upper wall 200A, the lower wall 200B, the right wall 200C, the left wall 200D, and the rear wall 200E form an accommodation portion 200F. The accommodation portion 200F is a rectangular parallelepiped space into which the pull-out type heating cooking apparatus 100 is fitted.

The embodiment of the present invention has been described above with reference to the accompanying drawings. However, the present invention is not limited to the embodiment described above, and the present invention can be implemented in various modes without departing from the gist thereof. The drawings primarily schematically illustrate each of the constituent elements for the sake of easier understanding, and the thickness, length, quantity, and the like of each of the illustrated constituent elements are different from the actual thickness, length, quantity, and the like by reason of creation of the drawings. Further, the material, shape, dimensions, and the like of each of the constituent elements illustrated in the embodiment described above are merely examples and are not particularly limited, and various modifications can be made within the scope not substantially departing from the effects of the present invention.

(1) As described with reference to FIG. 1 to FIG. 11, the pull-out type heating cooking apparatus 100 includes the air sending unit 14, but the present invention is not limited thereto. For example, the pull-out type heating cooking apparatus 100 may further include an air sending unit that sends hot air into the heating cooking chamber 100A.
(2) The pull-out type heating cooking apparatus 100 may further include a microwave supply unit.

### Industrial Applicability

The present invention provides a heating cooking apparatus, and the provided heating cooking apparatus has industrial applicability.

### Reference Signs List

51 Thermistor (temperature detection unit)
60 Wall portion
14A Heating room (housing)
141 First heater
142 Fan
100 Pull-out type heating cooking apparatus
F1 Air flow direction

## Claims

1. A heating cooking apparatus comprising:
a housing including an opening;
a cover portion including a suction hole portion and a blow-out hole portion, the cover portion covering the opening;
a fan disposed in the housing and configured to generate a flow of air from the suction hole portion to the blow-out hole portion;
a first heater disposed in the housing;
a temperature detection unit disposed in the housing and configured to detect a temperature; and
a wall portion disposed on an upstream side of the temperature detection unit in a direction of the flow of the air.

2. The heating cooking apparatus according to claim 1,
wherein the wall portion includes
a first wall disposed on an upstream side of the temperature detection unit in the direction of the flow of the air, and
a second wall disposed between the first heater and the temperature detection unit.

3. The heating cooking apparatus according to claim 2,
wherein the housing includes a base portion facing the cover portion, and
the first wall includes
a main body wall extending from the base portion toward the cover portion, and
an inclined wall disposed at an endmost portion of the main body wall, the inclined wall inclined toward the cover portion in the direction of the flow of the air.

4. The heating cooking apparatus according to any one of claims 1 to 3,
wherein a material of the wall portion is a metal, and
the temperature detection unit is a thermistor.

5. The heating cooking apparatus according to any one of claims 1 to 4,
wherein the suction hole portion is disposed in a center portion of the cover portion, and
the blow-out hole portion is disposed along an outer periphery of the suction hole portion,
the fan is a centrifugal fan facing the suction hole portion, and
the temperature detection unit and the wall portion are disposed on an outer periphery of the centrifugal fan.

6. The heating cooking apparatus according to claim 5, further comprising
an energization unit disposed outside the housing and connected to an external power source,
wherein the first heater includes
a heat generating portion disposed in the housing and configured to generate heat when a current flows through the heat generating portion, and
a coupling portion coupling the heat generating portion and the energization unit,
the heat generating portion is disposed along the outer periphery of the centrifugal fan, and
the coupling portion is closer to the temperature detection unit than the heat generating portion is.

7. The heating cooking apparatus according to any one of claims 1 to 6, further comprising:
a heating cooking chamber configured to accommodate an object to be heated; and
a control unit configured to control the fan and the first heater based on a detection result of the temperature detection unit,
wherein the fan suctions the air from an inside of the heating cooking chamber to an inside of the housing through the suction hole portion and blows the air from the inside of the housing to the inside of the heating cooking chamber through the blow-out hole portion.

8. The heating cooking apparatus according to claim 7, further comprising
a second heater disposed in the heating cooking chamber,
wherein the control unit controls the second heater based on the detection result of the temperature detection unit.
